(19) Europäisches Patentamt

European Patent Office

Office européen des brevets

(11) **EP 1 235 650 B1**

(12) **FASCICULE DE BREVET EUROPEEN**

(45) Date de publication et mention
de la délivrance du brevet:
**23.08.2006 Bulletin 2006/34**

(51) Int Cl.:
***B05C 11/02*** *(2006.01)* ***B05C 19/00*** *(2006.01)*
***B29C 67/00*** *(2006.01)*

(21) Numéro de dépôt: **00990038.2**

(22) Date de dépôt: **08.12.2000**

(86) Numéro de dépôt international:
**PCT/FR2000/003448**

(87) Numéro de publication internationale:
**WO 2001/041939 (14.06.2001 Gazette 2001/24)**

(54) **DISPOSITIF DE DEPOSE DE COUCHES MINCES DE MATIERE EN POUDRE OU PULVERULENTE ET PROCEDE ADAPTE**

VORRICHTUNG UND VERFAHREN ZUM AUFBRINGEN EINER DÜNNEN SCHICHT EINES PULVERFÖRMIGEN MATERIALS

DEVICE FOR APPLYING THIN LAYERS OF A POWDER OR PULVERULENT MATERIAL AND CORRESPONDING METHOD

(84) Etats contractants désignés:
**AT BE CH CY DE DK ES FI FR GB GR IE IT LI LU MC NL PT SE TR**

(30) Priorité: **10.12.1999 FR 9915620**

(43) Date de publication de la demande:
**04.09.2002 Bulletin 2002/36**

(73) Titulaire: **Ecole National Superieure de Ceramique Industrielle (E.N.S.C.I.)**
**87065 Limoges (FR)**

(72) Inventeurs:
• **Gaillard, Jean-Marie**
**87100 Limoges (FR)**
• **Hory, Arnaud**
**87430 Verneuil sur Vienne (FR)**

(74) Mandataire: **Thébault, Jean-Louis**
**SCHMIT-CHRETIEN-SCHIHIN**
**111, cours du Médoc**
**33300 Bordeaux (FR)**

(56) Documents cités:
**DE-A- 4 325 573**

**Description**

La présente invention concerne un dispositif de dépose de couches minces de matière en poudre ou pulvérulente, notamment de déposes successives de couches dans les machines de prototypage rapide.

L'invention couvre aussi le procédé de mise en couche à l'aide de ce dispositif.

On connaît par la demande de brevet PCT FR 99/00357 un procédé de prototypage rapide par frittage laser qui permet d'obtenir des pièces en céramique de formes complexes à partir d'une image en trois dimensions, en frittant des couches superposées de poudres à l'aide d'un laser.

Un tel procédé nécessite la réalisation d'étapes dont l'une consiste à étaler sous forme d'une fine couche la poudre ou le mélange de poudres et à compacter cette poudre pour en augmenter la densité.

L'épaisseur de telles couches est de l'ordre de quelques dizaines à quelques centaines de microns.

Les moyens de mise en couche décrits dans ce procédé comprennent une raclette qui permet de transférer de la poudre contenue dans un premier contenant vers la zone de travail du laser avec une épaisseur adaptée et constante.

Si un tel agencement conduit à des résultats satisfaisants lors de l'utilisation de la plupart des poudres, il convient d'améliorer la mise en couches lorsque les produits sont plus délicats à manier et surtout lorsque la granulométrie des poudres diminue, que le rapport de l'épaisseur de la couche et de la granulométrie varie ou encore que la forme des particules change.

Aussi, actuellement, pour permettre la réalisation de telles couches, la poudre est souvent adaptée en fonction des besoins, ce qui est une contrainte car il faut broyer de façon précise et classifier ces poudres par classes de granulométrie. Un tel tri s'effectue avec des moyens sophistiqués compte tenu des diamètres des grains.

Ainsi pour réaliser des couches homogènes, il faut travailler avec des poudres ayant un comportement rhéologique sensiblement identique à celui des liquides, ce qui est le cas par exemple des poudres atomisées dont les particules sont sensiblement sphériques et d'un diamètre subissant de faibles écarts.

Une telle préparation est d'un prix de revient élevé et surtout engendre des contraintes inacceptables pour des industriels.

Le document DE 43 25 573 A1 décrit un dispositif de réalisation de couches minces comportant une lame vibrante se déplaçant sur un tas de poudre afin de réaliser un couche mince unique.

Lorsque les poudres utilisées sont du type farine, c'est à dire qu'elle foisonne, il devient très difficile voire impossible de réaliser des couches homogènes.

Dans le cas de poudres foisonnantes, lorsque les couches sont inférieures à $100\mu m$, la raclette entraîne la poudre en totalité, par zones, ce qui crée des défauts inadmissibles pour réaliser des pièces finies de qualité en prototypage rapide.

Un tel problème se pose dans l'application au prototypage rapide mais il se pose de façon générale lorsque l'on cherche à mettre en couches minces des poudres foisonnantes.

L'objet de la présente invention est de proposer un dispositif de mise en couche simple, efficace y compris et surtout pour les poudres foisonnantes, qui peut être monté sur toutes les machines en ayant besoin et en remplacement de certains dispositifs actuellement en service.

A cet effet, selon la présente invention le dispositif de mise en couche mince d'une poudre sur des moyens supports comprenant des moyens de stockage de la poudre, des moyens de raclage avec un racleur comportant un sabot avec une face de travail ainsi que des moyens de guidage en translation suivant un sens de déplacement F̲, caractérisé en ce que le sabot est mobile en rotation et comprend des moyens de mise en inclinaison pour prendre au moins deux positions, la première dans laquelle la face de travail est parallèle aux moyens supports de couches pour la prise d'un volume déterminé de poudre et la seconde dans laquelle cette face de travail est inclinée d'un angle α̲ par rapport auxdits moyens supports.

Selon une autre caractéristique, la face de travail du sabot comprend un obstacle, avec plusieurs indentations.

Plus particulièrement, les indentations sont au nombre de trois et présentent une section transversale triangutaire/rectangle avec l'angle droit dans le plan de la face de travail et en arrière par rapport au sens de déplacement F̲.

Ainsi que le prévoient les caractéristiques de l'invention, le nombre de passages est déterminé en fonction de l'épaisseur de la couche et de la granulométrie de la poudre par une loi décroissante non linéaire du type $y = (ax+b)/(cx+d)$.

Le dispositif selon la présente invention est maintenant décrit en détail en regard des dessins annexés, sur lesquels les différentes figures représentent :

- figure 1, une vue schématique en perspective d'une installation intégrant un dispositif de mise en couches minces selon la présente invention,
- figure 2, une vue en coupe longitudinale, suivant l'axe de déplacement, du dispositif selon la présente invention
- figures 3A à 3F, des vues en coupe au cours d'un synoptique complet de fonctionnement du dispositif de mise en couches selon la présente invention, et
- figures 4A, 4B et 4C des vues respectivement de dessus, de devant et en élévation latérale d'un mode de réalisation préférentiel d'un racleur.

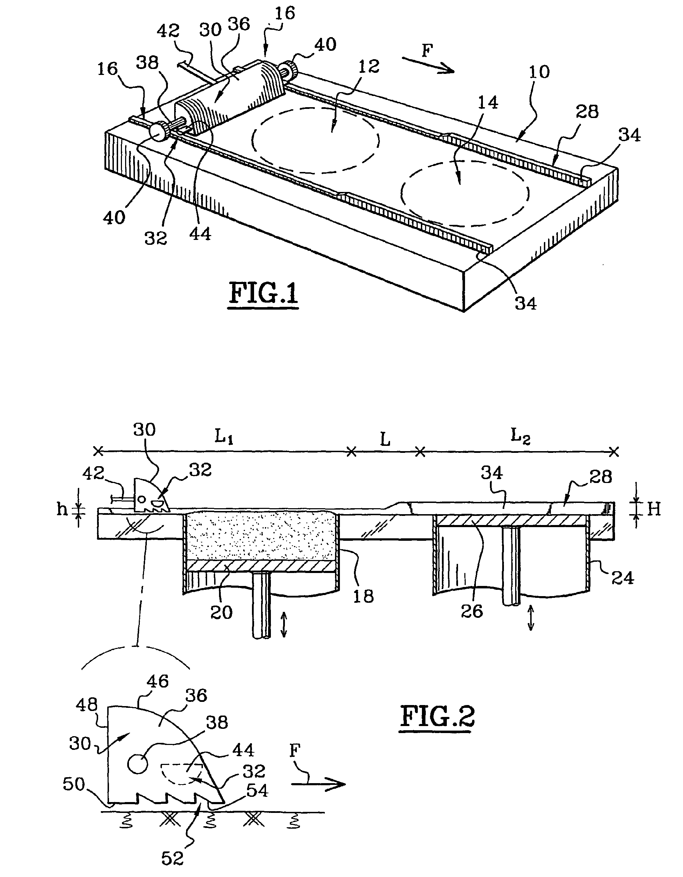

Sur la figure 1, on a représenté une installation qui intègre un dispositif selon la présente invention. Cette installation comprend un bâti 10, des moyens 12 de stockage et d'apport de poudre, des moyens 14 supports de couches et des moyens 16 de raclage et de mise en couche mince.

Les moyens 12 de stockage comprennent un puits 18 contenant la poudre et équipée d'un piston 20 interne, mobile en translation verticale, qui permet de remonter le niveau 22 supérieur de la poudre par rapport au bâti, ceci avec une très grande précision.

Les moyens 14 supports de couches minces de cette installation, donnée à titre d'exemple, comprennent aussi un puits 24 permettant d'escamoter un piston 26, mobile en translation verticale dans ledit puits. Les déplacements doivent aussi être d'une très grande précision.

Les moyens 16 de raclage, mobiles en translation sur des moyens 28 de guidage, comprennent un racleur 30 et des moyens 32 de suivi.

Les moyens 28 de guidage sont composés de deux rails 34 qui présentent une première hauteur $\underline{h}$ sur une longueur $\underline{L}_1$ et une hauteur $\underline{H}$ sur une longueur $\underline{L}_2$ avec une zone $\underline{L}$ de transition.

La longueur $\underline{L}_1$ est sensiblement au droit du puits de stockage et la longueur $\underline{L}_2$ est sensiblement au droit du support de couches minces.

Les moyens de mise en inclinaison et de guidage qui viennent d'être décrits sont des moyens mécaniques qui présentent l'avantage de pouvoir travailler dans des environnements agressifs ou même en température voire en hautes températures.

Le racleur 30 comporte un sabot 36, mobile en rotation, de façon libre, autour d'un axe 38 équipé de galets 40 dans le mode de réalisation présenté.

Les galets ont des dimensions telles qu'ils roulent sur le bâti permettant ainsi d'avoir une référence.

Ce racleur est mû en translation suivant le sens de déplacement indiqué par la flèche $\underline{F}$, qui est parallèle aux rails, grâce à tout moyen adapté, ces moyens n'étant pas représentés pour la clarté du dessin, seule la tige 42 de poussée étant figurée, cette tige prenant appui sur l'axe en sorte de ne pas perturber le pivotement.

Les dimensions de ce racleur sont telles qu'il se positionne entre les deux rails dans le sens transversal. Quant à son poids, il doit être suffisant pour assurer un roulage régulier sur le plan de travail.

Latéralement, deux ergots 44 font saillie, pour venir immédiatement au-dessus des rails, en appui glissant sur ceux-ci.

Le racleur est donc suspendu en déport vers l'avant par son axe 38 équipé des galets 40 reposant sur le bâti et soutenu sur l'avant par les ergots 44.

Les ergots 44 ont avantageusement un profil conjugué de celui des rails en sorte de suivre au plus juste le profil de ces rails et notamment d'aborder la zone $\underline{L}$ de transition de façon progressive.

Le sabot 36 présente une forme particulière et dans le mode préférentiel retenu, il est à section sensiblement triangulaire rectangle, définissant ainsi une paroi 46 frontale qui est sensiblement l'hypoténuse avec un angle vif d'attaque, une face 48 arrière verticale qui est l'un des côtés de l'angle droit et une face 50 de travail qui est le dernier côté. L'angle droit se situe à proximité immédiate du bâti et à l'arrière du sabot par rapport au sens de déplacement indiqué par la flèche $\underline{F}$.

Suivant la présente invention, la face 50 de travail présente aussi des particularités. Cette face comprend au moins un obstacle 52 qui évite à cette face d'être totalement lisse et plane. Cet obstacle permet une accroche de la poudre et un dépôt voire un compactage, régulier et homogène en diminuant la constante de compression.

Sur la vue agrandie de la figure 2, cet obstacle comprend des indentations 54, en l'occurrence au nombre de trois ayant également une section transversale triangulaire/rectangle, en homothétie avec le sabot 36 du racleur 30. L'angle droit de chaque indentation est dans le plan de la face 50 de travail et en arrière par rapport au sens de déplacement $\underline{F}$.

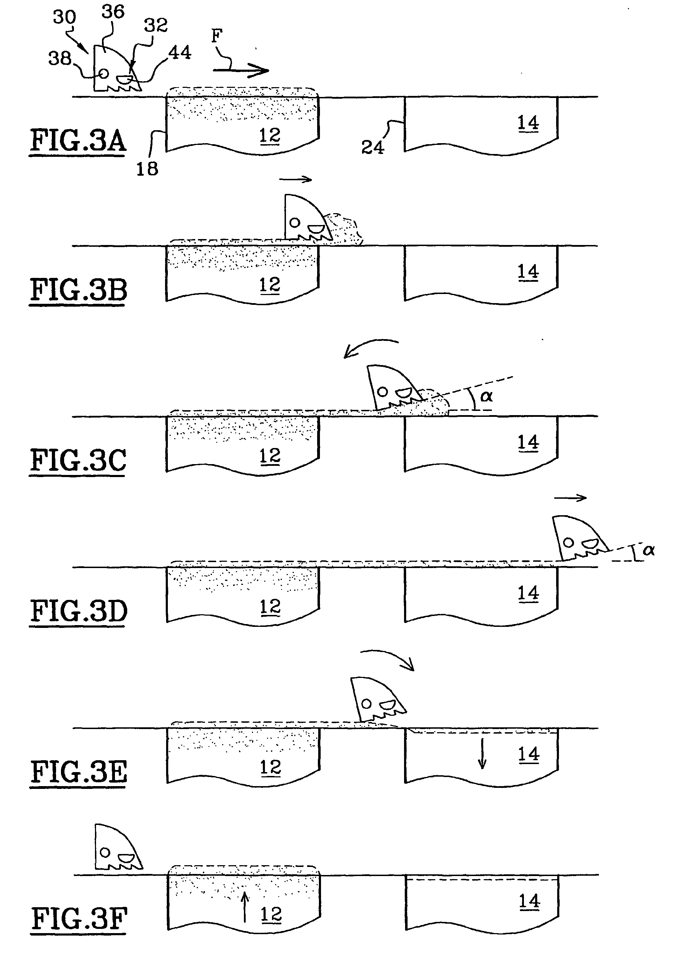

Le fonctionnement du dispositif de mise en couche mince selon la présente invention est maintenant décrit en détail à partir du synoptique des figures 3A à 3F, les références étant identiques à celles des figures 1 et 2.

La position initiale est montrée sur la figure 3A. Le sabot est en amont du puits 18 des moyens de stockage 12 et de la poudre est poussée par le piston 20 pour venir tel que représenté, au-dessus du plan de travail, sur une hauteur par rapport au plan de travail du bâti, supérieure à la distance qui sépare la face 50 de travail du sabot de ce même plan de travail.

Le sabot est ensuite déplacé suivant la direction $\underline{F}$, comme montré à l'étape 3B. lors de ce déplacement, la face 50 de travail reste parallèle au plan de travail car les ergots 44 glissent sur les rails, dans la portion $\underline{L}_1$ avec la hauteur $\underline{h}$. La face 46 avant pousse la poudre et assure la prise d'un volume donné en fonction de la hauteur de poudre et de la position relative du sabot. Ce volume est transféré jusqu'au droit du puits 24 comportant les moyens 14 supports de couche mince. Il faut alors assurer un l'étalement de cette poudre sur une couche d'épaisseur très faible en évitant tout manque.

A cette fin, le sabot est incliné d'un angle par rapport au plan de travail. Cette inclinaison est obtenue par les ergots 44 qui, glissant sur les rails 34, soulèvent l'avant du sabot et assurent son pivotement autour de l'axe 38.

Ce sabot pivoté, la face de travail se trouve aussi inclinée du même angle $\alpha$, ce qui induit plusieurs effets avantageux. Le premier est la prise de la totalité de la poudre car il se forme nécessairement une goulotte qui facilite le passage de la poudre sous la face de travail.

Le fait d'avoir une pente facilite la mise en compression de la couche mince et donc la compression progressive de la poudre. Grâce aux obstacles 52 que constituent les indentations 54, la poudre est comprimée sans glisser entre la face de travail et le plan de travail, car il se produit un effet de cisaillement.

En ce qui concerne la compression, on constate aussi que la face inclinée génère, par décomposition de la force de compression verticale résultant du poids du sabot, une composante dans le sens d'entraînement suivant la flèche $\underline{F}$. Cette composante participe à l'entraînement de la poudre, ce qui est également favorable à une mise en couche mince de qualité.

On remarque aussi que l'épaisseur de la couche mince est celle qui subsiste après le passage du sabot. Une fois incliné, le sabot libère un espace pus faible que l'espace initial.

Le sabot est déplacé suivant $\underline{F}$, jusqu'à ce que le support 26 de couche mince soit dépassé, ainsi que montré sur la figure 3D.

Le sabot est ensuite ramené dans sa position initiale avec un basculement au passage de la zone de transition pour ramener la face 50 de travail parallèle au plan de travail, figure 3E. Dès que le sabot est sorti de la zone du support de couches minces, la couche peut être traitée par exemple au moyen d'un laser et cette couche mince traitée est ensuite escamotée pour recevoir si besoin est une nouvelle couche dans les mêmes conditions que la précédente. L'escamotage s'effectue en abaissant le support 26, ceci avec précision. On obtient le résultat et le positionnement de la figure 3F.

Le mode de réalisation décrit est simplifié en sorte d'en expliquer et d'en montrer les étapes mais il peut être perfectionné. En effet, la variante avec des rails et des ergots de guidage présentent l'intérêt d'une application possible même en atmosphère agressive ou délicate comme une enceinte chauffée mais il est possible dans d'autres circonstances d'inclure une motorisation pour le pivotement et la mise en inclinaison. Dans ce cas, il est possible de faire varier avec un moteur pas à pas l'angle d'inclinaison de façon précise et donc de réaliser un dispositif plus adaptable, plus précis dans certaines circonstances et susceptible d'être piloté pour assurer des variations d'inclinaison suivant une programmation adaptée.

La mise en oeuvre a été présentée avec un seul passage mais on peut aussi envisager des variations de hauteur avec des passages successifs d'un même racleur muni de moyens de réglage de la hauteur de passage du sabot

Dans ce cas, lors du premier passage le volume nécessaire à la mise en couche mince finale est entraînée et la longueur de mise en couche est réduite. Ce n'est qu'au dernier passage que la couche atteint l'épaisseur recherchée et la surface voulue correspondant au volume initialement entraîné.

On peut aussi prévoir un attelage de deux ou plusieurs sabots successifs réglés à des hauteurs différentes, constituant un même racleur.

Le procédé de mise en couche selon la présente invention qui utilise le dispositif qui vient d'être décrit conduit à la détermination des cycles de mise en couches en fonction de l'épaisseur de la couche à réaliser en fonction de la granulométrie de la poudre à mettre en couche mince.

Il s'agit en effet, de déposer de manière progressive la poudre sans provoquer de compactage et surtout sans altérer la couche précédente.

C'est ainsi que pour réaliser une couche de 100 $\mu$m, il faut effectuer trois passages avec une poudre de l'ordre de 10 à 20 $\mu$m.

Pour obtenir ce résultat, une loi décroissante doit être utilisée préférentiellement non linéaire du type $y = (ax + b) / (cx + d)$.

On peut citer l'exemple suivant :

On donne des valeurs aux coefficients a, b, c et d, obtenues par expérience, 4, 0, 3 et 3, à partir de la machine utilisée et de la poudre.

On amorce le compactage avec une hauteur initiale de 500 $\mu$m et avec la volonté d'atteindre une hauteur finale de 100 $\mu$m :

$$y = (4 \mathrm{x} 0 + 0) / (3 \mathrm{x} 0 + 3) = 0$$

$$y = (4x1 + 0) / (3x1 + 3) = 0,666$$

$$y = (4x2 + 0) / (3x2 + 3) = 0,888$$

$$y = (4x3 + 0) / (3x3 + 3) = 1,00$$

Ainsi pour x = 3, c'est-à-dire le 3$^{ème}$ passage après le dépôt initial, soit 4 itérations, on obtient la hauteur finale imposée puisque le coefficient est de 1.

Il est ainsi possible de calculer le nombre de passages nécessaires, en fonction de l'épaisseur de la couche et du type de poudre.

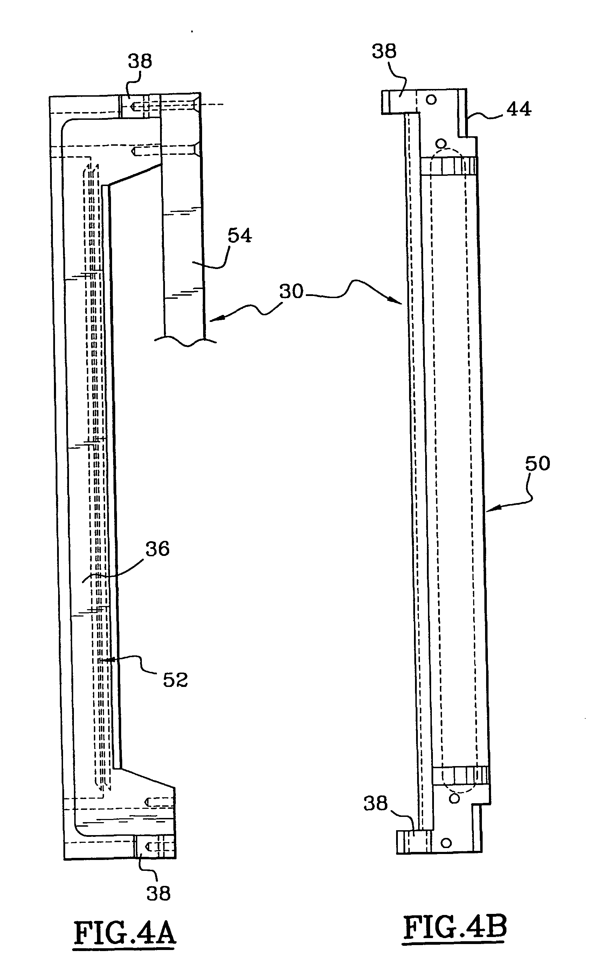

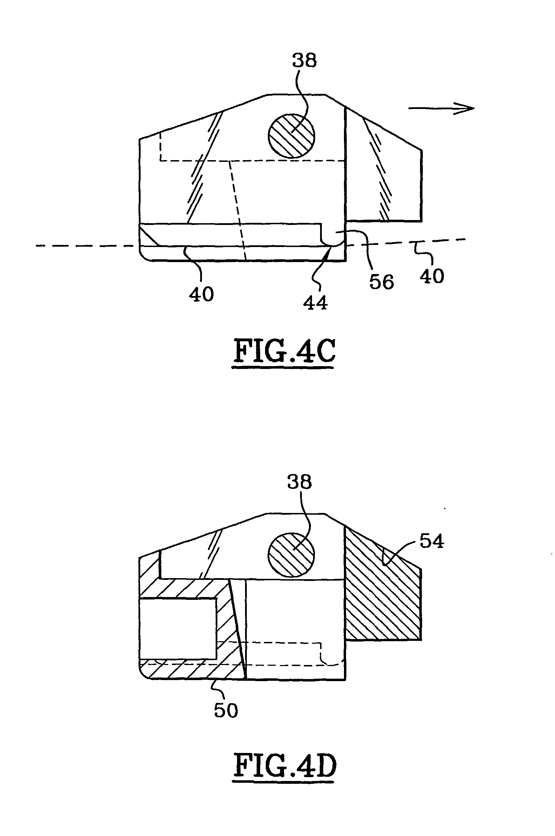

Sur les figures 4A, 4B, 4C et 4D, on a représenté un mode de réalisation préférentiel qui comprend un racleur avec les mêmes éléments que les représentations schématiques et qui portent les mêmes références.

Pour des considérations pratiques industrielles, un contrepoids 54 est disposé sur l'avant du sabot 36. On note aussi un ergot 44 de forme particulière avec une surface 56 de profil arrondi adapté qui autorise de nombreuses glissement et guidage sans usure prématurée.

Dans le cas de cette réalisation du racleur, les angles des indentations 54 doivent être mouchés soigneusement pour permettre une excellente régularité de répartition de la poudre.

Dans ce cas, les galets ont disparu au profit des surfaces de glissement sur les rails.

## Revendications

1. Dispositif de mise en couche mince d'une poudre sur des moyens (14) supports comprenant des moyens (12) de stockage de la poudre, des moyens (16) de raclage avec un racleur (30) comportant un sabot (36) avec une face (50) de travail ainsi que des moyens (28) de guidage en translation suivant un sens de déplacement F, **caractérisé en ce que** le sabot (36) est mobile en rotation et comprend des moyens (32,34) de mise en inclinaison pour prendre au moins deux positions, la première dans laquelle la face (50) de travail est parallèle aux moyens (14) supports de couches pour la prise d'un volume déterminé de poudre et la seconde dans laquelle cette face (50) de travail est inclinée d'un angle $\alpha$ par rapport auxdits moyens supports.

2. Dispositif de mise en couche mince selon la revendication 1, **caractérisé en ce que** la face (50) de travail du sabot (36) comprend un obstacle (52).

3. Dispositif de mise en couche mince selon la revendication 2, **caractérisé en ce que** l'obstacle comprend plusieurs indentations (54).

4. Dispositif de mise en couche mince selon la revendication 3, **caractérisé en ce que** les indentations (54) sont au nombre de trois et présentent une section transversale triangulaire/rectangle avec l'angle droit dans le plan de la face (50) de travail et en arrière par rapport au sens de déplacement F.

5. Dispositif de mise en couche mince selon l'une quelconque des revendications précédentes, **caractérisé en ce que** les moyens de mise en inclinaison sont des moyens mécaniques.

6. Dispositif de mise en couche mince selon la revendication 5, **caractérisé en ce que** les moyens mécaniques comprennent des rails (34) ayant une hauteur $h$ sur une longueur $L_1$, une longueur de transition $L$ et une hauteur $H$ sur une longueur $L_2$ et des ergots (44), en appui glissant sur lesdits rails.

7. Dispositif de mise en couche mince selon l'une quelconque des revendications 1 à 4, **caractérisé en ce que** les moyens de mise en inclinaison sont motorisés.

8. Procédé de mise en couche mince mettant en oeuvre le dispositif selon l'une quelconque des revendications précédentes, **caractérisé en ce que** le nombre de passages x est déterminé en fonction de l'épaisseur de la couche et de la granulométrie de la poudre par une loi décroissante non linéaire du type y = (ax + b) / (cx+d), y étant un coefficient représentant la hauteur de couche après x passages, les coefficients a, b, c, d étant des coefficients fonction de la machine et de la poudre utilisées.

**Claims**

1. A device for applying a thin layer of a powder on a support means (14), including means (12) for storing the powder, means (16) for scraping with a scraper (30) comprising a shoe (36) with a working face (50) and means (28) for guiding in translation in a direction of movement $\underline{F}$, **characterised in that** the shoe (36) is able to move in rotation and includes means (32, 34) for inclining in order to adopt at least two positions, the first in which the working face (50) is parallel to the layer support means (14) for taking a given volume of powder and a second in which this working face (50) is inclined by an angle $\underline{\alpha}$ with respect to said support means.

2. A device for applying a thin layer according to claim 1, **characterised in that** the working face (50) of the shoe (6) includes an obstacle (52).

3. A device for applying a thin layer according to claim 2, **characterised in that** the obstacle includes several indentations (54).

4. A device for applying a thin layer according to claim 3, **characterised in that** the indentations (54) are three in number and provide a triangular/rectangular transverse section with the right-angle in the plane of the working face (50) and at the rear with respect to the direction of movement $\underline{F}$.

5. A device for applying a thin layer according to any one of the preceding claims, **characterised in that** the inclination means are mechanical means.

6. A device for applying a thin layer according to claim 5, **characterised in that** the mechanical means include rails (34) with a height $\underline{h}$ over a length $\underline{L}_1$, a transition length $\underline{L}$ and a height $\underline{H}$ over a length $\underline{L}_2$ and lugs (44), in sliding abutment on the said rails.

7. A device for applying a thin layer according to any one of claims 1 to 4, **characterised in that** the inclination means are motorised.

8. Process for applying thin layers using the device according to any of the preceding claims, **characterized in that** the number of pass x is based on the thickness of the layer and the granulemetry of the powder using a decreasing non linear law of the type y = (ax+b)/cx+d), y being a coefficient representing the height of the layer after x pass, coefficients a,b,c,d being coefficients depending on the powder and device used.

**Patentansprüche**

1. Vorrichtung zum Aufbringen eines Pulvers als Dünnschicht auf Unterstützungsmittel (14), die Mittel (12) zum Aufbewahren des Pulvers, Glattstreichmittel (16) mit einem Glattstreicher (30), der einen Schlitten (36) mit einer Arbeitsfläche (50) aufweist, und Mittel (28) für die translatorische Führung längs einer Verlagerungsrichtung $\underline{F}$ umfasst, **dadurch gekennzeichnet, dass** der Schlitten (36) rotatorisch beweglich ist und Neigungsmittel (32, 34) umfasst, damit er wenigstens zwei Positionen einnehmen kann, wovon in der ersten die Arbeitsfläche (50) zu den Schichtunterstützungsmitteln (14) parallel ist, um ein bestimmtes Pulvervolumen aufzubringen, und wovon in der zweiten diese Arbeitsfläche (50) um einen Winkel α in Bezug auf die Unterstützungsmittel geneigt ist.

2. Vorrichtung zum Aufbringen einer Dünnschicht nach Anspruch 1, **dadurch gekennzeichnet, dass** die Arbeitsfläche (50) des Schlittens (36) ein Hindernis (52) umfasst.

3. Vorrichtung zum Aufbringen einer Dünnschicht nach Anspruch 2, **dadurch gekennzeichnet, dass** das Hindernis mehrere Zahnungen (54) umfasst.

4. Vorrichtung zum Aufbringen einer Dünnschicht nach Anspruch 3, **dadurch gekennzeichnet, dass** die Zahnungen (54) in der Anzahl drei vorliegen und einen transversalen Querschnitt in Form eines rechtwinkligen Dreiecks mit einem rechten Winkel in der Ebene der Arbeitsfläche (50) und hinten in Bezug auf die Verlagerungsrichtung $\underline{F}$ besitzen.

5. Vorrichtung zum Aufbringen einer Dünnschicht nach einem der Vorhergehenden Ansprüche, **dadurch gekennzeichnet, dass** die Neigungsmittel mechanische Mittel sind.

6. Vorrichtung zum Aufbringen einer Dünnschicht nach Anspruch 5, **dadurch gekennzeichnet, dass** die mechanischen Mittel Schienen (34) mit einer Höhe $\underline{h}$ auf einer Länge $\underline{L}_1$, einer Übergangslänge L und einer Höhe $\underline{H}$ auf einer Länge $\underline{L}_2$ sowie Zapfen (44), die sich auf den Schienen gleitend abstützen, umfassen.

7. Vorrichtung zum Aufbringen einer Dünnschicht nach einem der Ansprüche 1 bis 4, **dadurch gekennzeichnet, dass** die Neigungsmittel motorgetrieben sind.

8. Verfahren zum Aufbringen einer Dünnschicht, das die Vorrichtung nach einem der vorhergehenden Ansprüche verwendet, **dadurch gekennzeichnet, dass** die Anzahl x von Durchläufen in Abhängigkeit von der Dicke der Schicht und von der Granolometrie des Pulvers durch ein nichtlineares abfallendes Gesetz des Typs $y = (ax + b)/(cx + d)$ bestimmt ist, wobei y ein Koeffizient ist, der die Höhe der Schicht nach x Durchläufen repräsentiert und wobei die Koeffizienten a, b, c, d Koeffizienten sind, die von der verwendeten Maschine und von dem verwendeten Pulver abhängen.

FIG.1

FIG.2

EP 1 235 650 B1

FIG.3A

FIG.3B

FIG.3C

FIG.3D

FIG.3E

FIG.3F

9

**FIG.4A**          **FIG.4B**

38

40

44

56

40

## FIG.4C

38

54

50

## FIG.4D